# EUROPÄISCHE PATENTSCHRIFT

(11) **EP 0 770 851 B1**
(45) Veröffentlichungstag und Bekanntmachung des Hinweises auf die Patenterteilung: **23.08.2000**
(21) Anmeldenummer: 96250235.7
(22) Anmeldetag: 18.10.1996
(51) Int. Cl.: G01D 9/28

(54) **Mehrkanalige Registriereinrichtung**
Multi-channel recording device
Appareil enregistreur à canaux multiples

(30) Priorität: 25.10.1995 DE 19541106
(43) Veröffentlichungstag der Anmeldung: 02.05.1997
(73) Patentinhaber: ABB PATENT GmbH, 68309 Mannheim (DE)
(72) Erfinder: Rippert, Winfried, 63477 Maintal (DE); Kuhn, Franz, Dipl.-Ing., 63500 Seligenstadt (DE); Vlachojannis, Georgios, Dipl.-Ing., 65439 Flörsheim (DE); Kirste, Hans-Herbert, 31628 Landesbergen (DE); Bruhn, Arno, 42489 Wülfrath (DE)
(74) Vertreter: Henze, Lothar, Dipl.-Ing.

(56) Entgegenhaltungen:
- EP-A- 0 084 079
- DE-U- 9 408 798
- PATENT ABSTRACTS OF JAPAN Bd. 095, Nr. 382 & JP-A-07 110 361 (NAITO HIROSHI) 25 April 1995

## Beschreibung

Die Erfindung betrifft eine mehrkanalige Registriereinrichtung zum Aufzeichnen der Zeitverläufe einer Mehrzahl anschaltbarer Meßsignale.

Derartige Registriereinrichtungen sind beispielsweise aus dem Hartmann & Braun Listenblatt 40-1.10 und DE-U-9 408 798.9 bekannt und weisen die üblichen Mittel zum Transport eines Aufzeichnungsträgers sowie für jedes Meßsignal ein mit elektrischen Antriebsmitteln zur Bewegung eines Schreibstiftes quer zur Transportrichtung des Aufzeichnungsträgers ausgestattetes Schreibsystem auf. Wegen der Mehrzahl der Registrierkanäle ist eine derartige Registriereinrichtung mit einer Mehrzahl von Skalenstreifen ausrüstbar, deren Skaleneinteilung der Art und der Dimension der physikalischen Größe, die als Meßsignal an einen der Registrierkanäle angeschaltet ist, anpaßbar ist. Darüber hinaus weisen derartige Registriereinrichtungen regelmäßig Mittel zur statischen verbalen Zuordnung der Meßsignale zu den Registrierkanälen auf. Diese Mittel werden üblicherweise als den Kanalnummern zugeordnete Beschriftungsfelder dargestellt.

Zur optimalen Ausnutzung der zur Verfügung stehenden Frontfläche für eine derartige Registriereinrichtung sind deren äußere Abmessungen im wesentlichen durch das Format, insbesondere der Breite des Aufzeichnungsträgers vorgegeben. Zweckentsprechend sind die Skalenstreifen entgegen der Transportrichtung des Aufzeichnungsträgers kaskadiert angeordnet. Da die sichtbare Frontfläche der Registriereinrichtung hauptsächlich der Visualisierung der aufgezeichneten Meßsignale vorbehalten ist, steht zur verbalen Beschreibung der physikalischen Größe des Meßsignals daher nur eine geringe nutzbare Fläche zur Verfügung, die üblicherweise bezogen auf den sichtbaren Bereich des Aufzeichnungsträgers den Skalenstreifen gegenüberliegend angeordnet sind. Folglich geht die direkte Zuordenbarkeit eines Meßkanals bzw. der zugehörigen physikalischen Größe zu den ihm zugeordneten Skalenstreifen verloren, was als Nachteil empfunden wird.

Der Erfindung liegt daher die Aufgabe zugrunde, eine für sich bekannte mehrkanalige Registriereinrichtung dahingehend weiterzuentwickeln, daß eine optische Zuordnung jedes Registrierkanals zu dem seiner physikalischen Größe entsprechenden Skalenstreifen ermöglicht wird.

Erfindungsgemäß wird diese Aufgabe mit den Mitteln des Patentanspruchs 1 gelöst. Vorteilhafte Ausgestaltungen der Erfindung sind in den Patentansprüchen 2 bis 4 beschrieben.

Die Erfindung besteht im wesentlichen darin, eine erste und eine zweite Gruppe von optischen Signalisierungsmitteln an der Frontseite der Registriereinrichtung vorzusehen, wobei die erste Gruppe genau n optische Signalisierungsmittel, die jeweils einem von n Registrierkanälen zugeordnet sind, umfaßt und die zweite Gruppe genau m optische Signalisierungsmitteln, die jeweils einem von m Skalenstreifen zugeordnet sind, umfaßt. Weiterhin ist vorgesehen, jedem optischen Signalisierungsmittel der ersten Gruppe genau ein optisches Signalisierungsmittel der zweiten Gruppe derart zuzuordnen, daß zu jedem selektierbaren Registrierkanal der zugehörige Skalenstreifen markierbar ist. Vorteilhafterweise sind die optischen Signalisierungsmittel als lichtemittierende Dioden ausgeführt. Die Erfindung wird nachstehend anhand eines Ausführungsbeispiels näher erläutert. Die dazu erforderlichen Zeichnungen zeigen
- Figur 1: einen Ausschnitt aus der Frontfläche einer Registriereinrichtung mit frei plazierten Signalisierungsmitteln der ersten Gruppe und
- Figur 2: eine Frontansicht einer Registriereinrichtung mit Zuordnung der Signalisierungsmittel der ersten Gruppe zu den Beschreibungen der physikalischen Größen.

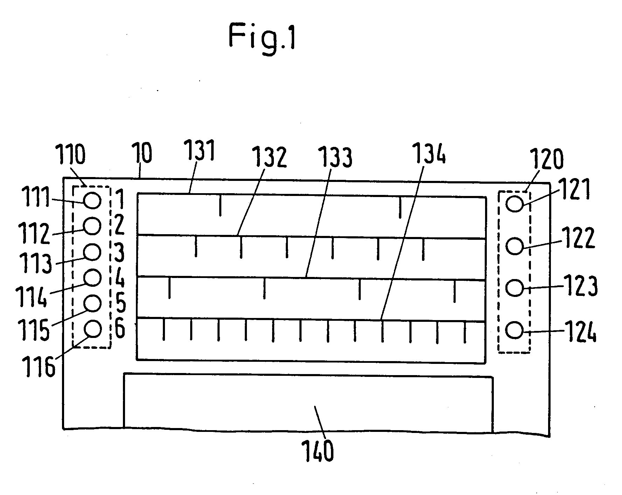

In Figur 1 ist die Frontseite einer Registriereinrichtung 10 ausschnittweise dargestellt, wobei nur die erfindungswesentlichen Merkmale gezeigt sind. In dieser Ausführungsform ist eine Registriereinrichtung 10 zur Aufzeichnung der Zeitverläufe von n=6 Meßsignalen ausgestaltet. Weiterhin wird für diese Ausführungsform davon ausgegangen, daß es mindestens zwei als Meßsignale aufgeschaltete registrierbare physikalische Größen gibt, die vom identischen Typ sind und einen identischen Meßbereich überstreichen. Dazu ist die Registriereinrichtung 10 mit m = 4 Skalenstreifen 131 bis 134 ausgestattet.

Die Frontseite der Registriereinrichtung 10 weist ein Sichtfenster 140 auf, durch das der Aufzeichnungsträger und die darauf aufgezeichneten Informationen der einzelnen Registrierkanäle 1 bis 6 verfolgbar sind. Darüber hinaus ist eine erste Gruppe 110 von optischen Signalisierungsmitteln 111 bis 116 für die n = 6 Registrierkanäle 1 bis 6 vorgesehen, die im wesentlichen frei plazierbar ist. Dabei ist jedem Signalisierungsmittel 111 bis 116 der ersten Gruppe 110 genau eine Kanalkennzeichnung des zugeordneten Registrierkanals 1 bis 6 zugewiesen. Die Kanalkennzeichnung kann alphanumerisch oder farblich ausgeführt sein.

Jedem Skalenstreifen 131 bis 134 ist genau ein optisches Signalisierungsmittel 121 bis 124 einer zweiten Gruppe 120 von optischen Signalisierungsmitteln physisch zugeordnet. Für diese Ausführungsform mit m=4 Skalenstreifen 131 bis 134 wird davon ausgegangen, daß es mindestens zwei als Meßsignale aufgeschaltete registrierbare physikalische Größen gibt, die vom identischen Typ, beispielsweise Temperatur, sind und einen identischen Meßbereich überstreichen. Vorteilhafterweise ist für ein derartiges Paar von physikalischen Größen nur ein einziger Skalenstreifen 131 bis 134 vorgesehen, um durch eine vergrößerte Darstellung der Meßbereichswerte eine verbesserte Ablesung bei gleichem Platzbedarf ermöglichen zu können.

Jedem optischen zugeordnete Signalisierungsmittel 111 bis 116 der ersten Gruppe 110 ist genau ein Signalisierungsmittel 121 bis 124 der zweiten Gruppe 120 zugeordnet, wobei jedem Signalisierungsmittel 121 bis 124 der zweiten Gruppe 120 eine Mehrzahl von Signalisierungsmitteln 111 bis 116 der ersten Gruppe 110 zugeordnet sein kann.

Durch beliebige, nicht dargestellte Selektionsmittel sind die Registrierkanäle 1 bis 6 einzeln wählbar, wobei das jeweilig zugeordnete Signalisierungsmittel 111 bis 116 der ersten Gruppe 110 und das dem zugehörigen Skalenstreifen 131 bis 134 zugeordnete Signalisierungsmittel 121 bis 124 der zweiten Gruppe 120 aktiviert wird. Durch die Aktivierung jeweils eines optischen Signalisierungsmittels 111 bis 116 der ersten Gruppe 110 und jeweils eines optischen Signalisierungsmittels 121 bis 124 der zweiten Gruppe 120 ist eine eindeutige Zuordnung jedes Registrierkanals 1 bis 6 zu dem zugehörigen Skalenstreifen 131 bis 134 gewährleistet. Die geringe Größe der als lichtemittierende Dioden ausgeführten optischen Signalisierungsmittel 111 bis 124 der ersten und zweiten Gruppe 110 und 120 ermöglicht vorteilhafterweise diese Form der Zuordnungsvisualisierung auch in Kompakt-Registriereinrichtungen kleinster Bauform.

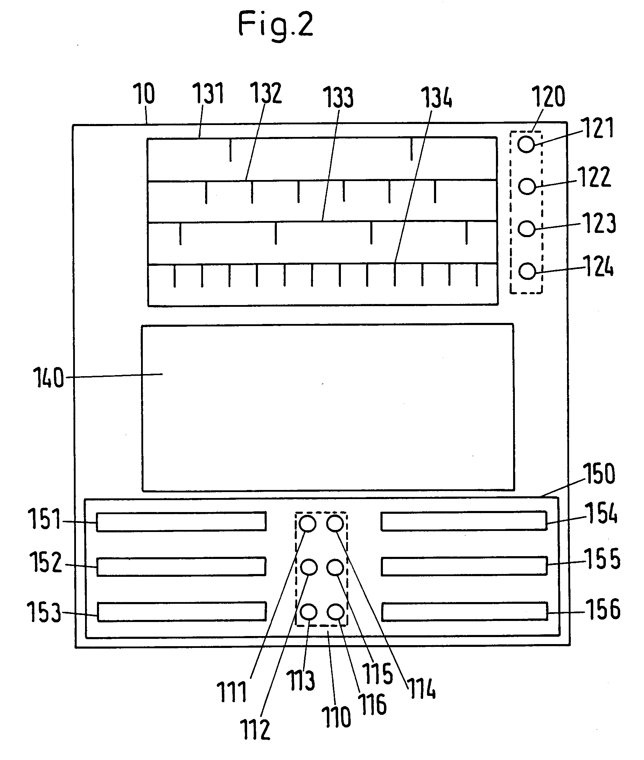

In einer zweiten Ausführungsform ist in Figur 2 unter Verwendung gleicher Bezugszeichen für gleiche Mittel die Frontseite einer Registriereinrichtung 10 dargestellt. Darüber hinaus sind Mittel 150 zur Kanalzuordnung bezogen auf das Fenster 140 den Skalenstreifen 131 bis 134 gegenüberliegend im Fußbereich der Frontseite der Registriereinrichtung 10 dargestellt. Dabei sind die Mittel 150 zur Kanalzuordnung mit Schrifttafeln 151 bis 156 für n = 6 Registrierkanäle ausgestattet, die jeweils eine Beschreibung des physikalischen Typs und/oder der prozessualen Herkunft, das dem jeweiligen Registrierkanal 1 bis 6 zugeordneten Meßsignals beschriftet sind. In dieser Ausführungsform sind die optischen Signalisierungsmittel 111 bis 116 der ersten Gruppe 110 in die Mittel 150 der Kanalzuordnung integriert. Dabei ist jeder Schrifttafel 151 bis 156 genau ein optisches Signalisierungsmittel 111 bis 116 der ersten Gruppe 110 physisch zugeordnet.

Jedem optischen zugeordnete Signalisierungsmittel 111 bis 116 der ersten Gruppe 110 ist genau ein Signalisierungsmittel 121 bis 124 der zweiten Gruppe 120 zugeordnet, wobei jedem Signalisierungsmittel 121 bis 124 der zweiten Gruppe 120 eine Mehrzahl von Signalisierungsmitteln 111 bis 116 der ersten Gruppe 110 zugeordnet sein kann.

Durch beliebige, nicht dargestellte Selektionsmittel sind die Registrierkanäle 1 bis 6 einzeln wählbar, wobei das jeweilig zugeordnete Signalisierungsmittel 111 bis 116 der ersten Gruppe 110 und das dem zugehörigen Skalenstreifen 131 bis 134 zugeordnete Signalisierungsmittel 121 bis 124 der zweiten Gruppe 120 aktiviert wird. Durch die Aktivierung jeweils eines optischen Signalisierungsmittels 111 bis 116 der ersten Gruppe 110 und jeweils eines optischen Signalisierungsmittels 121 bis 124 der zweiten Gruppe 120 ist eine eindeutige Zuordnung jedes Registrierkanals 1 bis 6 zu dem zugehörigen Skalenstreifen 131 bis 134 gewährleistet. Die geringe Größe der als lichtemittierende Dioden ausgeführten optischen Signalisierungsmittel 111 bis 124 der ersten und zweiten Gruppe 110 und 120 ermöglicht vorteilhafterweise diese Form der Zuordnungsvisualisierung auch in Kompakt-Registriereinrichtungen kleinster Bauform.

## Patentansprüche

1. Mehrkanalige Registriereinrichtung zum Aufzeichnen der Zeitverläufe einer Mehrzahl anschaltbarer Meßsignale, die mindestens Mittel zum Transport eines Aufzeichnungsträgers, eine Mehrzahl von Skalenstreifen, Mittel zur statischen, verbalen Zuordnung der Meßsignale zu den Registrierkanälen und für jedes Meßsignal ein mit elektrischen Antriebsmitteln zur Bewegung eines Schreibstiftes quer zur Transportrichtung des Aufzeichnungsträgers ausgestattetes Schreibsystem besitzt, und bei der jedem Registrierkanal ein Skalenstreifen zuordenbar ist,
**dadurch gekennzeichnet,**
- daß eine erste und eine zweite Gruppe (110, 120) von optischen Signalisierungsmitteln (111 bis 12m) an der Frontseite der Registriereinrichtung (10) angeordnet sind, wobei die erste Gruppe (110) genau n optische Signalisierungsmittel (111 bis 11n), die jeweils einem von n Registrierkanälen (1 bis n) zugeordnet sind, umfaßt und die zweite Gruppe (120) genau m optische Signalisierungsmittel (121 bis 12m), die jeweils einem von m Skalenstreifen (131 bis 13m) zugeordnet sind, umfaßt,
- daß jedem optischen Signalisierungsmittel (111 bis 11 n) der ersten Gruppe (110) genau ein optisches Signalisierungsmittel (121 bis 12m) der zweiten Gruppe (120) derart zuordenbar ist, daß zu jedem selektierbaren Registrierkanal (1 bis n) der zugehörige Skalenstreifen (131 bis 13m) markierbar ist.

2. Registriereinrichtung nach Anspruch 1
**dadurch gekennzeichnet,**
daß die optischen Signalisierungsmittel (111 bis 12m) lichtemittierende Dioden sind.

3. Registriereinrichtung nach einem der Ansprüche 1 und 2
**dadurch gekennzeichnet,**
daß die Registrierkanäle (1 bis n) mit einer Kanalkennzeichnung unverwechselbar gekennzeichnet sind und die optischen Signalisierungsmittel (111 bis 11n) der ersten Gruppe (110) in einer Reihe angeordnet und jeweils mit der Kanalkennzeichnung des zugehörigen Registrierkanals (1 bis n) bezeichnet sind.

4. Registriereinrichtung nach einem der Ansprüche 1 und 2
**dadurch gekennzeichnet**,
daß die optischen Signalisierungsmittel (111 bis 11 n) der ersten Gruppe (110) den Mitteln (150) zur statischen, verbalen Zuordnung der Meßsignale zu den Registrierkanälen (1 bis n) zugeordnet sind.

## Claims

1. A multi-channel recording apparatus for plotting the time behaviour of a plurality of measuring signals which can be switched on, which comprises at least means for transporting a record carrier, a plurality of scale strips, means for the static, verbal association of the measuring signals with the recording channels and for each measuring signal a plotting system equipped with electric drive means for moving a stylus transversely to the direction of transport of the record carrier, and in which one scale strip can be associated with each recording channel,
characterised in that
- a first and a second group (110,120) of visual signalling means (111 to 12m) are arranged on the front side of the recording apparatus (10), the first group (110) comprising exactly n visual signalling means (111 to 11n), each of which is associated with one of n recording channels (1 to n), and the second group (120) comprising exactly m visual signalling means (121 to 12m), each of which is associated with one of m scale strips (131 to 13m),
- exactly one visual signalling means (121 to 12m) of the second group (120) can be associated with each visual signalling means (111 to 11n) of the first group (110) such that the associated scale strip (131 to 13m) can be marked for each selectable recording channel (1 to n).

2. A recording apparatus according to Claim 1, characterised in that the visual signalling means (111 to 12m) are light-emitting diodes.

3. A recording apparatus according to one of Claims 1 and 2, characterised in that the recording channels (1 to n) are marked non-interchangeably with a channel marker and the visual signalling means (111 to 11n) of the first group (110) are arranged in a row and are each marked with the channel marker of the associated recording channel (1 to n).

4. A recording apparatus according to one of Claims 1 and 2, characterised in that the visual signalling means (111 to 11n) of the first group (110) are associated with the means (150) for the static, verbal association of the measuring signals with the recording channels (1 to n).

## Revendications

1. Dispositif d'enregistrement à plusieurs canaux pour l'enregistrement des profils temporels d'une pluralité de signaux de mesure pouvant être mis en oeuvre, qui comporte au moins des moyens pour le transport d'un support d'enregistrement, une pluralité de bandes graduées, des moyens pour l'association statique verbale des signaux de mesure aux canaux d'enregistrement et, pour chaque signal de mesure, un système d'écriture équipé de moyens d'entraînement électriques pour déplacer un stylet transversalement à la direction de transport du support d'enregistrement, et dans lequel une bande graduée peut être associée à chaque canal d'enregistrement,
caractérisé en ce que :
- des premier et second groupes (110, 120) de moyens de signalisation optiques (111 à 12m) sont agencés sur la face avant du dispositif d'enregistrement (10), le premier groupe (110) comportant précisément n moyens de signalisation optiques (111 à 11n), qui, à chaque fois, sont associés à un de n canaux d'enregistrement (1 à n), et le second groupe (120) comportant précisément m moyens de signalisation optiques (121 à 12m), qui, à chaque fois, sont associés à une de m bandes graduées (131 à 13m),
- à chaque moyen de signalisation optique (111 à 11n) du premier groupe (110), il peut être associé précisément un moyen de signalisation optique (121 à 12m) du second groupe (120) de sorte que la bande graduée correspondante (131 à 13m) peut être associée à chaque canal d'enregistrement (1 à n) pouvant être sélectionné.

2. Dispositif d'enregistrement selon la revendication 1,
caractérisé en ce que les moyens de signalisation optiques (111 à 12m) sont des diodes émettant de la lumière.

3. Dispositif d'enregistrement selon une des revendications 1 et 2,
caractérisé en ce que les canaux d'enregistrement (1 à n) sont caractérisés par une caractéristique de canal de façon indubitable, et les moyens de signalisation optiques (111 à 11n) du premier groupe (110) sont agencés en une série et, à chaque fois, sont désignés par la caractéristique du canal d'enregistrement correspondant (1 à n).

4. Dispositif d'enregistrement selon une des revendications 1 et 2,
caractérisé en ce que les moyens de signalisation optiques (111 à 11n) du premier groupe (110) sont associés à des moyens (150) pour l'association statique verbale des signaux de mesure aux canaux d'enregistrement (1 à n).
